# EUROPÄISCHE PATENTSCHRIFT

(11) **EP 2 978 636 B1**
(45) Veröffentlichungstag und Bekanntmachung des Hinweises auf die Patenterteilung: **31.10.2018**
(21) Anmeldenummer: 14708476.8
(22) Anmeldetag: 22.02.2014
(51) Int. Cl.: B60R 7/02, B60R 5/04

(54) **BEHÄLTNIS, INSBESONDERE ZUM EINBAUEN IN EINE HECKKLAPPE EINES KRAFTFAHRZEUGS**
CONTAINER IN PARTICULAR IN THE TAILGATE OF A MOTOR VEHICLE
RECIPIENT EN PARTICULIER DANS LE HAYON ARRIERE D'UN VEHICULE AUTOMOBILE

(30) Priorität: 30.03.2013 DE 102013005535
(43) Veröffentlichungstag der Anmeldung: 03.02.2016
(73) Patentinhaber: Daimler AG, 70327 Stuttgart (DE)
(72) Erfinder: STORZ, Alexander, 70619 Stuttgart (DE)
(74) Vertreter: JENSEN & SON
(86) Internationale Anmeldenummer: PCT/EP2014/000470
(87) Internationale Veröffentlichungsnummer: WO 2014/161625

(56) Entgegenhaltungen:
- DE-A1- 19 858 194
- DE-A1-102012 014 786
- US-A1- 2005 279 793
- US-A1- 2006 022 479
- US-A1- 2012 000 954

## Beschreibung

Die vorliegende Erfindung betrifft ein Behältnis, insbesondere zum Einbauen in eine Heckklappe eines Kraftfahrzeugs, sowie eine Heckklappe eines Kraftfahrzeugs mit einem solchen Behältnis. Die vorliegende Erfindung betrifft außerdem ein Kraftfahrzeug mit einer solchen Heckklappe.

Laderäume von Kraftfahrzeugen lassen sich üblicherweise mit einer schwenkbaren Heckklappe verschließen. Insbesondere in Kleinwagen ist der durch einen solchen Laderaum bereitgestellte Stauraum jedoch begrenzt. Daher ist es bei Kleinwagen oftmals üblich, in der schwenkbaren Heckklappe ein Behältnis zur Aufnahme von zusätzlichem Ablagegut vorzusehen. Ein solches Behältnis eignet sich üblicherweise für die Aufnahme von Staugut mit begrenzten räumlichen Abmessungen, wie beispielsweise Werkzeug, einem Verbandskasten o.ä. Denn derartiges Ablagegut mit relativ geringen äußeren Abmessungen kann problemlos in einem in der Heckklappe integrierten Behältnis verstaut werden, so dass der im Laderaum verbleibende Stauraum vollständig als Stauvolumen für sperrige Gegenstände genutzt werden kann.

Ein Nachteil von herkömmlichen in eine Heckklappe integrierten Behältnissen besteht wie vorangehend erläutert darin, dass sich das Behältnis nicht für die Aufnahme von sperrigen Gegenständen eignet. Da die Heckklappe selbst eine geringe Bauhöhe aufweist, erlaubt ein vollständig in die Heckklappe integriertes Behältnis nur die Aufnahme von Gegenständen mit begrenzter Höhe.

Die DE 195 22 296 C2 offenbart ein Fahrzeug mit einer Fahrzeugkarosserie, einem darin vorgesehenen nach unten von einem Ladeboden begrenzten Laderaum und mit einer den Laderaum rückseitig abschließenden, geteilten Hecktür. Ein Türunterteil der Hecktür ist mittels eines Scharniers um eine quer verlaufende Schwenkachse schwenkbar an der Hinterkante des Ladebodens gehalten. Der Ladeboden ist als eine an der Fahrzeugkarosserie lösbar befestigte, herausnehmbare Bodenplatte ausgebildet und weist Justierspiel zum Einstellen des Hecktürunterteils auf. Das Scharnier ist in der Bodenplatte und im Türunterteil und sich über deren gesamte Breite erstreckend integriert derart ausgebildet, dass es die Trennstelle zwischen Türunterteil und Bodenplatte im Wesentlichen abdichtet.

Die DE 20 2004 017 604 U1 offenbart eine Gepäcktasche, die zur zusätzlichen Gepäckbeförderung an den Außenflächen eines Kraftfahrzeugs befestigt werden kann. Die Gepäcktasche besitzt ein Bodenteil und ein Rückenteil, die mittels eines Scharniers schwenkbar miteinander verbunden sind, so dass durch Aufklappen von Boden- und Rückenteil ein variabler Hohlraum zur Aufnahme von Staugut gebildet wird. Mit Hilfe eines zusätzlichen Gelenks lässt sich der gewählte Aufklappwinkel arretieren.

Die US 2006/0022479 A1 offenbart ein integriertes Aufbewahrungssystem für ein Fahrzeug mit einem ausziehbaren Behälter. Der Behälter umfasst zwei vertikalen Platten, zwischen denen ein flexibles Aufbewahrungselement für Ladung befestigt ist. Ein flexibles Aufbewahrungselement kann beispielsweise Netz oder Stoff umfassen.

Die US 2012/0000954 A1 offenbart einen zusammenfaltbaren Behälter, welcher dem Oberbegriff des Anspruchs 1 entspricht, dessen Seitenwände Teil einer Dreigelenk-Anordnung sind. Durch Zuammenfalten des Behälters, wobei besagte Dreigelenke verstellt werden, lässt sich die Behälterhöhe des Behältnisses einstellen.

Die vorliegende Erfindung beschäftigt sich mit dem Problem, eine verbesserte Ausführungsform für ein Behältnis, insbesondere zum Einbau in eine Heckklappe eines Kraftfahrzeugs anzugeben.

Dieses Problem wird gelöst durch den Gegenstand der unabhängigen Patentansprüche. Bevorzugte Ausführungsformen sind Gegenstand der abhängigen Patentansprüche.

Die Erfindung beruht auf dem allgemeinen Gedanken, ein zum Einbau in eine Heckklappe eines Kraftfahrzeugs geeignetes Behältnis mit einem an der Heckklappe anbringbaren Behältnisunterteil und einem mit dem Behältnisunterteil verbundenen Behältnisdeckel zum wahlweisen Öffnen oder Verschließen des Behältnisunterteils vorzusehen, wobei der Behältnisdeckel über eine Gelenkanordnung mit dem Behältnisunterteil verbunden ist. Die Gelenkanordnung ist dabei erfindungsgemäß derart ausgebildet, dass der Behältnisdeckel in zumindest zwei unterschiedlichen Abständen zum Behältnisunterteil anordenbar ist, so dass eine Höhe des Behältnisses einstellbar ist.

Auf diese Weise können je nach Bedarf Gegenstände mit unterschiedlichen äußeren Abmessungen, insbesondere mit unterschiedlichen Gegenstandshöhen, im Behältnis abgelegt verstaut werden.

Durch ein einfaches Öffnen des Behältnisdeckels können die im Behältnis verstauten Gegenstände wieder aus dem Behältnis entnommen werden. Für den Fall, dass im Behältnis keine oder kleinere Gegenstände abgelegt sind, wird der Behältnisdeckel in dem geringeren der beiden Abstände zum Behältnisunterteil angeordnet, so dass das vom Behältnis benötigte Raumvolumen möglichst klein ist. Zur Aufnahme sperriger Gegenstände kann der Behältnisdeckel auf einfache Weise auf den größeren der beiden Abstände eingestellt werden, so dass die Höhe des Behältnisses größer ist bei einer Anordnung des Behältnisdeckels relativ zum Behältnisunterteil im geringeren der beiden Abstände. Je nachdem, welche äußeren Abmessungen die in dem Behältnis aufzunehmenden Gegenstände aufweisen, kann also die Höhe des Behältnisses entsprechend angepasst werden.

Erfindungsgemäß besitzt die Gelenkanordnung wenigstens ein Dreigelenk, vorzugsweise zwei Dreigelenke, mit einem ersten und zweiten Gelenkarm umfassen. Dabei sind der erste Gelenkarm mittels eines ersten Gelenks gelenkig mit dem Behältnisdeckel und der zweite Gelenkarm mittels eines zweiten Gelenks gelenkig mit dem Behältnisunterteil verbunden. Die beiden Gelenkarme sind schließlich mittels eines dritten Gelenks gelenkig miteinander verbunden. Mittels einer derartigen Gelenkanordnung lässt sich auf technisch einfache und somit kostengünstige Weise die Verstellbarkeit des Behältnisdeckels derart realisieren, dass er in mindestens zwei unterschiedlichen Abständen zum Behältnisunterteil anordenbar ist.

Erfindungswesentlich ist ferner, dass der Behältnisdeckel mittels des wenigstens einen Dreigelenks zwischen einer geöffneten Position, in welche er das Behältnisunterteil zum Be- oder Entladen von Ablagegut freigibt, und einer geschlossenen Position, in welche er das Behältnisunterteil verschließt, schwenkbar ist. Somit lässt sich mittels des Dreigelenks neben der Verstellbarkeit des Behältnisdeckels zum Behältnisunterteil mit unterschiedlichen Höhen des Behältnisses gleichzeitig eine Öffnung des Behältnisdeckels realisieren, was ein komfortables Verstauen bzw. Entnehmen von Ablagegut im Behältnisunterteil erlaubt.

In einer vorteilhaften Weiterbildung ist das wenigstens eine Dreigelenk zwischen einer ersten, zweiten und dritten Position verstellbar, wobei sich der Behältnisdeckel in der ersten Position des Dreigelenks in der geöffneten Position befindet. Demgegenüber befindet sich der Behältnisdeckel in der zweiten und dritten Position des Dreigelenks in der geschlossenen Position, wobei das Behältnis in der zweiten Position des Dreigelenks eine größere Höhe aufweist als in der dritten Position. Eine derartige Verstellbarkeit des Dreigelenks zwischen drei Positionen ermöglicht eine besonders einfache Beladung bzw. eine Entnahme von Ablagegut im Behältnis, wobei gleichzeitig die erforderliche Behältnishöhe auf einfache Weise an die räumlichen Abmessungen des im Behältnis verstauten Ablageguts angepasst werden kann. Für den Fall, dass sich kein Ablagegut im Behältnis befindet, bietet es sich an, das Dreigelenk in die dritte Position zu verstellen, in welcher der Behältnisdeckel das Behältnisunterteil verschließt und die Höhe des Behältnisses somit minimal ist.

In einer technisch besonders einfach herzustellenden Ausführungsform kann das wenigstens eine Dreigelenk in der Art eines Klappscharniers ausgebildet sein. Da solche Klappscharniere kommerziell in großen Mengen verfügbar sind, können durch Verwendung eines als Klappscharnier ausgebildeten Dreigelenks die Herstellungskosten des Behältnisses weiter reduziert werden.

Vorzugsweise umfasst die Gelenkanordnung ein Anschlagelement, mittels welchem der Behältnisdeckel in der geöffneten ersten und/oder geschlossenen dritten Position mit dem Behältnisunterteil verriegelbar oder verriegelt ist. Dies verhindert ein unerwünschtes Verstellen des Behältnisdeckels. Mittels des Anschlagelements kann zudem verhindert werden, dass sich das Behältnis auf unerwünschte Weise, beispielsweise in einem Fahrbetrieb des das Behältnis verwendenden Kraftfahrzeugs, öffnet und somit die im Behältnis verstauten Gegenstände bzw. aus dem Behältnis herausfallen können. Das Anschlagelement kann in der Höhe verstellbar sein.

In einer technisch relativ einfach zu realisierenden und somit kostengünstigen Ausführungsform kann das Anschlagelement als, insbesondere drehbare und selbsthemmende, Einrasteinrichtung ausgebildet sein, welche in der ersten oder dritten Position eingerastet werden kann.

In einer besonders bevorzugten Ausführungsform kann die Einrasteinrichtung ein Einrastelement umfassen, in welches ein am Behältnisdeckel vorgesehenes komplementäres Fixierungselement einrastbar oder eingerastet ist. Mittels einer derartigen Einrasteinrichtung wird das Umklappen des Dreigelenks in der ersten Position und in der dritten Position verhindert. Auf diese Weise lässt sich eine Verschlusssicherung für den Behältnisdeckel am Behältnisunterteil auf technisch besonders einfache Weise realisieren.

In einer besonders bevorzugten Ausführungsform kann an der Gelenkanordnung wenigstens ein Anschlag vorgesehen sein, mittels welchem die Gelenkanordnung in der geschlossenen zweiten Position stabilisiert ist. Somit ermöglicht das Federelement einem Benutzer des Behältnisses ein komfortables Öffnen des Behältnisdeckels. Beispielsweise kann daran gedacht sein, dass nach einem Öffnen des Verschlusselements durch den Benutzer der Behältnisdeckel mittels des Federelements durch die von diesem bewirkte Vorspannkraft automatisch in die geöffnete Position bewegt wird.

Alternativ oder zusätzlich kann an der Gelenkanordnung ein Federelement vorgesehen sein, mittels welchem die Gelenkanordnung den Behältnisdeckel in seine geöffnete Position vorspannt. Für den Fall, dass sperrige Gegenstände im Behältnis verstaut werden sollen, ermöglicht eine solche Stabilisierung der Gelenkanordnung in der geschlossenen zweiten Position, dass das Behältnis stabil die der zweiten Position zugeordnete Höhe des Behältnisses beibehält und sich somit die Höhe des Behältnisses beispielsweise während eines Fahrbetriebs des das Behältnis verwendenden Kraftfahrzeugs nicht auf unerwünschte Weise ändert. Alternativ oder zusätzlich kann an der Gelenkanordnung ein Federelement vorgesehen sein, welches ein selbsttätiges Aufklappen des Behältnisdeckels in der ersten und dritten Position verhindert. Alternativ oder zusätzlich kann das Dreigelenk ferner geometrisch so ausgeführt sein, dass es ein Aufklappen des Behältnisdeckels in der dritten Position durch Selbsthemmung verhindert.

Die vorliegende Erfindung betrifft weiterhin eine Heckklappe eines Kraftfahrzeugs mit einem Basiselement, mit einem am Basiselement angebrachten Schwenkelement, mittels welchem das Basiselement schwenkbar mit einem Heckbereich des Kraftfahrzeugs zum wahlweisen Öffnen oder Verschließen einer im Heckbereich vorgesehenen Hecköffnung des Kraftfahrzeugs verbindbar ist, sowie mit einem auf der Oberseite des Basiselements angebrachten Behältnis mit einem oder mehreren der vorangehend erläuterten Merkmale.

Die Erfindung betrifft schließlich ein Kraftfahrzeug mit einem eine Hecköffnung aufweisenden Heckbereich. Die Hecköffnung ist mittels der vorangehend vorgestellten Heckklappe verschließbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1a: ein erfindungsgemäßes Behältnis in einer geöffneten ersten Position,
- Fig. 1b: die Gelenkanordnung des Behältnisses in der ersten Position,
- Fig. 2a: das erfindungsgemäße Behältnis in einer geschlossenen zweiten Position,
- Fig. 2b: die Gelenkanordnung des Behältnisses in der zweiten Position,
- Fig. 3a: das erfindungsgemäße Behältnis in einer geschlossenen dritten Position,
- Fig. 3b: die Gelenkanordnung des Behältnisses in der dritten Position.

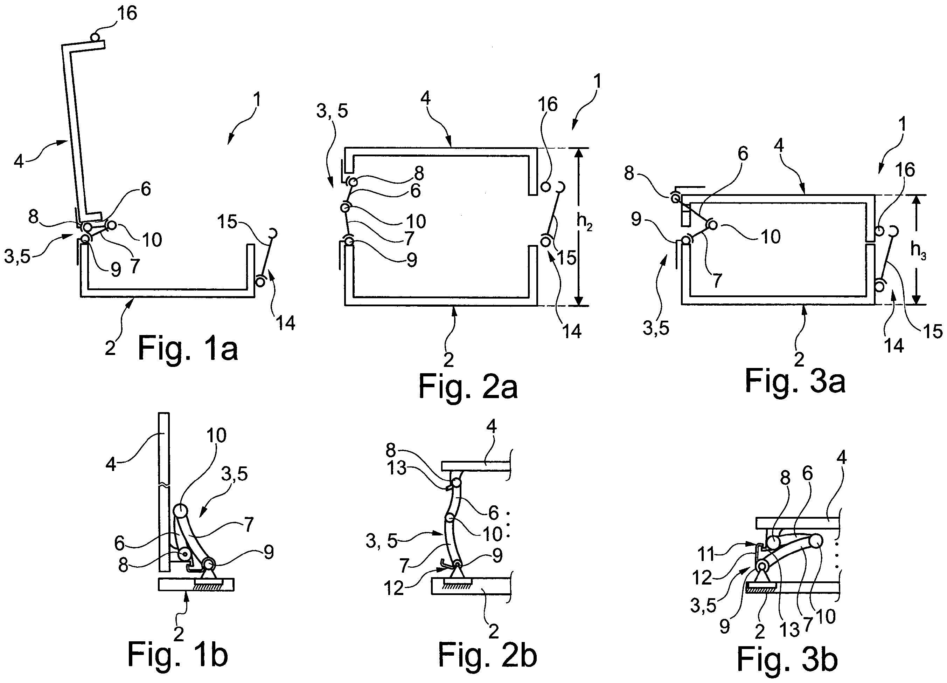

In der Figur 1a ist ein erfindungsgemäßes Behältnis in einem Längsschnitt grobschematisch dargestellt und mit dem Bezugszeichen 1 bezeichnet. Das Behältnis 1 umfasst ein an einer Heckklappe eines Kraftfahrzeugs anbringbares Behältnisunterteil 2 sowie einen mit dem Behältnisunterteil 2 über eine Gelenkanordnung 3 mit dem Behältnisunterteil 2 verbundenen Behältnisdeckel 4. Mittels der Gelenkanordnung 3 kann der Behältnisdeckel 4 zum Verschließen des Behältnisunterteils 2 in zumindest zwei unterschiedlichen Abständen h₂, h₃ zum Behältnisunterteil 2 mechanisch stabil angeordnet werden. Das geschlossene Behältnis 1 ist also zwischen den zwei Höhen h₂, h₃ höhenverstellbar.

Die Gelenkanordnung 3 umfasst wenigstens ein Dreigelenk 5, welches in der Figur 1b in einer Detailansicht dargestellt ist. Das Dreigelenk 5 umfasst einen ersten und zweiten Gelenkarm 6, 7. Der erste Gelenkarm 6 ist mittels eines ersten Gelenks 8 gelenkig mit dem Behältnisdeckel 4 verbunden. Entsprechend ist der zweite Gelenkarm 7 mittels eines zweiten Gelenks 9 mit dem Behältnisunterteil 2 verbunden. Die beiden Gelenkarme 6, 7 sind schließlich mittels eines dritten Gelenks 10 gelenkig miteinander verbunden.

Die Figuren 1a und 1b zeigen das Behältnis 1 bzw. die Gelenkanordnung 3 mit dem Dreigelenk 5 in einer geöffneten Position des Behältnisdeckels 4, in welcher dieser das Behältnisunterteil 2 zum Be- oder Entladen von Staugut freigibt. Der Behältnisdeckel 4 ist mittels der Gelenkanordnung 3 bzw. des Dreigelenks 5 in zwei in den Figuren 2 und 3 gezeigte geschlossene Positionen schwenkbar, in welcher er das Behältnisunterteil 2 verschließt. Aus den Darstellungen der Figuren 1, 2 und 3 lässt sich somit entnehmen, dass das Dreigelenk 5 zwischen einer in der Figur 1a/b gezeigten geöffneten Position, und einer in den Figuren 2a/b und 3a/b gezeigten zweiten bzw. dritten Position verstellbar ist, wobei sich der Behältnisdeckel 4 in der zweiten und dritten Position des Dreigelenks 5 in der geschlossenen Position befindet.

In der in der Figur 2a/b gezeigten zweiten Position des Behältnisses 1 bzw. des Dreigelenks 5 weist das Behältnis 1 eine größere Höhe h₂ als in der dritten Position auf, in welcher die Höhe des Behältnisses h₃ beträgt.

Aus der Darstellung der Figuren 1b, 2b und 3b entnimmt man ferner, dass das Dreigelenk 5 in der Art eines Klappscharniers ausgebildet sein kann. In der in der Figur 2 gezeigten zweiten Position des Dreigelenks 5 ist dieses also wie in der Figur 2b gezeigt in einem ausgeklappten Zustand zwischen dem Behältnisdeckel 4 und dem Behältnisunterteil 2 angeordnet. Demgegenüber ist das als Klappscharnier ausgebildete Dreigelenk 5 in der in der Figur 3b gezeigten dritten Position in einem eingeklappten Zustand zwischen dem Behältnisdeckel 4 und dem Behältnisunterteil 2 angeordnet.

Aus der Figur 1b und 3b lässt sich ferner entnehmen, dass die Gelenkanordnung 3 ein Anschlagelement 11 umfassen kann. Mittels des Anschlagelements 11 kann der Behältnisdeckel 4 in der in der Figur 1b gezeigten geöffneten, ersten Position und in der Figur 3b gezeigten geschlossenen dritten Position mit dem Behältnisunterteil 2 verriegelt werden. Hierzu kann das Anschlagelement 11 beispielsweise als Einrasteinrichtung ausgebildet sein. Eine solche Einrasteinrichtung kann ein am Dreigelenk 5 vorgesehenes Einrastelement 12 aufweisen, in welches ein am Behältnisdeckel 4 vorgesehenes komplementäres Fixierungselement 13 einrastbar ist. In einer Variante kann an dem die beiden Gelenkarme 6 und 7 verbindenden Gelenk 10 ein Federelement vorgesehen sein, das ein Aufklappen in der ersten und dritten Position verhindert. In einer weiteren Variante kann das Dreigelenk 3 geometrisch so ausgeführt sein, dass ein Aufklappen in der dritten Position durch Selbsthemmung verhindert wird.

Alternativ oder zusätzlich kann an der Gelenkanordnung 3 auch wenigstens ein der Übersichtlichkeit halber nicht gezeigter Anschlag vorgesehen sein, mittels welchem die Gelenkanordnung 3 in der geschlossenen zweiten Position des Behältnisdeckels 4 (vgl. Figur 2a,b) stabilisiert werden kann. Auf diese Weise kann sichergestellt werden, dass für den Fall, dass im Behältnis 1 sperrige Gegenstände abgelegt sind, diese nicht durch ein unerwünschtes selbsttätiges Verstellen des Behältnisdeckels 4 von der zweiten Position mit Höhe h₂ in die dritte Position mit geringerer Höhe h₃ beschädigt wird. Anstelle eines solchen Anschlags sind auch weitere geeignete Vorrichtungen vorstellbar, mittels welcher die Gelenkanordnung 3 in der geschlossenen zweiten Position stabilisiert werden kann.

Alternativ oder zusätzlich kann auch eine geeignete Vorrichtung, beispielsweise in der Art eines Anschlags, einer Einrasteinrichtung o.ä. vorgesehen sein, mittels welcher die Gelenkanordnung 3 in der geschlossenen dritten Position des Behältnisdeckels 4 (vgl. Figur 3a, b) stabilisiert wird. Auf diese Weise kann ein unerwünschtes "Aufschnappen" des Behältnisdeckels 4 von der dritten Position in die zweite Position verhindert werden.

Des Weiteren kann an der Gelenkanordnung 3 auch ein der Übersichtlichkeit in den Figuren nicht gezeigtes Federelement vorgesehen sein, mittels welchem die Gelenkanordnung 3 den Behältnisdeckel 4 zu seiner geöffneten Position hin vorspannt. Dies erleichtert ein Öffnen des Behältnisdeckels 4 durch einen Benutzer.

Zusätzlich zum Anschlagelement 11 ist am Behältnis 1 auch ein separates höhenverstellbares Verschlusselement 14 vorgesehen, mittels welchem der Behältnisdeckel 4 in seiner geschlossenen zweiten Position und dritten Position am Behältnisunterteil 2 verriegelbar ist. Das Verschlusselement 14 kann separat zur Gelenkanordnung 3 am Behältnisunterteil 2 befestigt sein und in der Art eines Verschlusshebels 15 ausgebildet sein, welcher in der geschlossenen Position des Behältnisdeckels 4 an einem am Behältnisdeckel 4 vorgesehenen Befestigungselement 16 fixierbar ist. In einer vereinfachten Variante kann ein nicht-höhenverstellbares, Verschlusselement 14 auch so ausgeführt sein, dass es in der zweiten Position und in der dritten Position an zwei unterschiedlichen am Behältnisdeckel 2 angebrachten Befestigungselementen 16 fixierbar ist.

In weiterbildenden Varianten können im Behältnis 1, insbesondere am Behältnisunterteil 2 oder am Behältnisdeckel 4, aber auch an der Gelenkanordnung 3, ein oder mehrere geeignete Anschläge vorgesehen sein, welche ein ungewolltes Öffnen des Behältnisdeckels 4 verhindern.

Das Behältnis 1 kann Teil einer Heckklappe eines Kraftfahrzeugs sein. Ein solche Heckklappe kann ein Basiselement und ein am Basiselement angebrachtes Schwenkelement umfassen, mittels welchem das Basiselement schwenkbar mit einem Heckbereich des Kraftfahrzeugs verbunden ist. Auf diese Weise kann eine im Heckbereich vorgesehene Hecköffnung des Kraftfahrzeugs wahlweise geöffnet oder verschlossen werden. Auf der Oberseite des Basiselements kann dann das vorangehend erläuterte Behältnis 1 angebracht sein.

## Patentansprüche

1. Behältnis (1) zum Einbauen in eine Heckklappe eines Kraftfahrzeugs
- mit einem an der Heckklappe anbringbaren Behältnisunterteil (2),
- mit einem mit dem Behältnisunterteil (2) verbindbaren oder verbundenen Behältnisdeckel (4) zum wahlweisen Öffnen oder Verschließen des Behältnisunterteils (2),
- wobei der Behältnisdeckel (2) über eine Gelenkanordnung (3) mit dem Behältnisunterteil verbunden ist, mittels der der Behältnisdeckel (4) in zumindest zwei unterschiedlichen Abständen (h₁, h₂) zum Behältnisunterteil (2) anordenbar ist, so dass eine Höhe des Behältnisses (1) einstellbar ist,
- wobei die Gelenkanordnung (3) wenigstens ein Dreigelenk (5) jeweils mit einem ersten und zweiten Gelenkarm (6, 7) umfasst,
- wobei der erste Gelenkarm (6) mittels eines ersten Gelenks (8) gelenkig mit dem Behältnisdeckel (4) verbunden ist, der zweite Gelenkarm (7) mittels eines zweiten Gelenks (9) gelenkig mit dem Behältnisunterteil (2) verbunden ist und die beiden Gelenkarme (6, 7) mittels eines dritten Gelenks (10) gelenkig miteinander verbunden sind,
**dadurch gekennzeichnet, dass**
der Behältnisdeckel (4) mittels des wenigstens einen Dreigelenks (5) zwischen einer geöffneten Position, in welcher er das Behältnisunterteil (2) zum Be- oder Entladen von Ablagegut freigibt, und einer geschlossenen Position, in welcher er das Behältnisunterteil (2) verschließt, schwenkbar ist.

2. Behältnis nach Anspruch 1,
**dadurch gekennzeichnet, dass**
- das wenigstens eine Dreigelenk (5) zwischen einer ersten, zweiten und dritten Position verstellbar ist,
- sich der Behältnisdeckel (4) in der ersten Position des Dreigelenks (5) in der geöffneten Position befindet,
- sich der Behältnisdeckel (4) in der zweiten und dritten Position des Dreigelenks (5) in der geschlossenen Position befindet, wobei das Behältnis (1) in der zweiten Position des Dreigelenks (5) eine größere Höhe (h₂) aufweist als in der dritten Position.

3. Behältnis nach Anspruch 1 oder 2,
**dadurch gekennzeichnet, dass**
das wenigstens eine Dreigelenk (5) in der Art eines Klappscharniers ausgebildet ist.

4. Behältnis nach Anspruch 2 oder 3,
**dadurch gekennzeichnet, dass**
die Gelenkanordnung (3) ein Anschlagelement (11) umfasst, mittels welchem der Behältnisdeckel (4) in der geöffneten ersten und/oder geschlossenen dritten Position mit dem Behältnisunterteil (2) verriegelbar oder verriegelt ist.

5. Behältnis nach Anspruch 4,
**dadurch gekennzeichnet, dass**
das Anschlagelement (11) als, insbesondere drehbare und selbsthemmende, Einrasteinrichtung ausgebildet ist, welche in der ersten oder dritten Position einrastbar ist.

6. Behältnis nach einem der Ansprüche 2 bis 5,
**dadurch gekennzeichnet, dass**
- an der Gelenkanordnung (3) wenigstens ein Anschlag vorgesehen ist, mittels welchem die Gelenkanordnung (3) in der geschlossenen zweiten Position stabilisiert ist, und/oder
- an der Gelenkanordnung (3) ein Federelement vorgesehen ist, mittels welchem die Gelenkanordnung (3) den Behältnisdeckel (4) in seine geöffnete Position vorspannt,
- an der Gelenkanordnung (3) ein Federelement vorgesehen ist, welches ein selbsttätiges Aufklappen des Behältnisdeckels (4) in der ersten und dritten Position verhindert.

7. Heckklappe eines Kraftfahrzeugs,
- mit einem Basiselement,
- mit einem am Basiselement angebrachten Schwenkelement, mittels welchem das Basiselement schwenkbar mit einem Heckbereich des Kraftfahrzeugs zum wahlweisen Öffnen oder Verschließen einer im Heckbereich vorgesehenen Hecköffnung des Kraftfahrzeugs verbindbar ist,
- mit einem auf Oberseite des Basiselements angebrachten Behältnis (1) nach einem der vorhergehenden Ansprüche.

8. Kraftfahrzeug,
- mit einem eine Hecköffnung aufweisenden Heckbereich,
- wobei die Hecköffnung mittels einer Heckklappe nach Anspruch 7 verschließbar ist.

## Claims

1. Container (1) for installation into a tailgate of a motor vehicle,
- with a container bottom part (2) which can be attached to the tailgate,
- with a container cover (4) connectable or connected to the container bottom part (2) for optionally opening or closing the container bottom part (2),
- wherein the container cover (4) is connected to the container bottom part via a hinge arrangement (3), by means of which the container cover (4) can be arranged in at least two different distances (h₁, h₂) from the container bottom part (2), so that a height of the container (1) can be adjusted,
- wherein the hinge arrangement (3) comprises at least one three-hinge unit (5), each with a first and a second hinge arm (6, 7),
- wherein the first hinge arm (6) is pin-connected to the container cover (4) by means of a first joint (8), the second hinge arm (7) is pin-connected to the container bottom part (2) by means of a second joint (9) and the two hinge arms (6, 7) are pin-connected to each other by means of a third joint (10),
**characterised in that**
the container cover (4) is pivotable by means of the at least one three-hinge unit (5) between an open position in which it releases the container bottom part (2) for loading or unloading items to be stored and a closed position in which it closes the container bottom part (2).

2. Container according to claim 1,
**characterised in that**
- the at least one three-hinge unit (5) is adjustable between a first, a second and a third position,
- the container cover (4) is in the open position in the first position of the three-hinge unit (5),
- the container cover (4) is in the closed position in the second and the third position of the three-hinge unit (5), the container (1) having a greater height (h₂) in the second position of the three-hinge unit (5) than in the third position.

3. Container according to claim 1 or 2,
**characterised in that**
the at least one three-hinge unit (5) is designed in the manner of a folding hinge.

4. Container according to claim 2 or 3,
**characterised in that**
the hinge arrangement (3) comprises a stop element (11), by means of which the container cover (4) can be or is locked to the container bottom part (2) in the open first position and/or in the closed third position.

5. Container according to claim 4,
**characterised in that**
the stop element (11) is designed as an in particular rotatable and self-locking latching device which can be latched in the first or in the third position.

6. Container according to any of claims 2 to 5,
**characterised in that**
- at least one stop by means of which the hinge arrangement (3) is stabilised in the closed second position is provided on the hinge arrangement (3), and/or
- a spring element by means of which the hinge arrangement (3) preloads the container cover (4) towards its open position is provided on the hinge arrangement (3),
- a spring element which prevents an automatic opening up of the container cover (4) in the first and in the third position is provided on the hinge arrangement (3).

7. Tailgate of a motor vehicle,
- with a base element,
- with a swivel element fitted to the base element, by means of which swivel element the base element can be pivotably joined to a rear region of the motor vehicle for optionally opening or closing a rear opening provided in the rear region of the motor vehicle,
- with a container (1) according to any of the preceding claims mounted on the top of the base element.

8. Motor vehicle,
- with a rear region having a rear opening,
- wherein the rear opening can be closed by means of a tailgate according to claim 7.

## Revendications

1. Contenant (1) destiné à encastrer dans un hayon arrière d'un véhicule automobile
- comprenant une partie inférieure (2) de contenant pouvant être montée sur le hayon arrière,
- comprenant un couvercle (4) de contenant relié ou pouvant être relié à la partie inférieure (2) de contenant destiné à sélectivement ouvrir ou fermer la partie inférieure (2) de contenant,
- le couvercle (2) de contenant étant relié par un système articulé (3) à la partie inférieure de contenant, au moyen duquel le couvercle (4) de contenant peut être disposé à au moins deux distances différentes (h₁, h₂) de sorte à pouvoir régler la hauteur du contenant (1),
- le système articulé (3) comprenant au moins un triangle articulé (5) respectivement avec un premier et un second bras articulé (6, 7),
- le premier bras articulé (3) étant relié de manière articulée au moyen d'une première articulation (8) au couvercle (4) de contenant, le second bras articulé (7) étant relié de manière articulée au moyen d'une deuxième articulation (9) à la partie inférieure (2) de contenant et les deux bras articulés (6, 7) étant reliés de manière articulée au moyen d'une troisième articulation (10) l'un à l'autre,
- **caractérisé en ce que**
- le couvercle (4) de contenant étant pivotant au moyen de l'au moins un triangle articulé (5) entre une position ouverte, dans laquelle il libère la partie inférieure (2) de contenant pour charger ou décharger des marchandises, et une position fermée, dans laquelle il ferme la partie inférieure (2) de contenant.

2. Contenant selon la revendication 1, **caractérisé en ce que**
- l'au moins un triangle articulé (5) peut être réglé entre une première, une deuxième et une troisième position,
- le couvercle (4) de contenant se trouve dans la position ouverte, dans la première position du triangle articulé (5),
- le couvercle (4) de contenant se trouve dans la deuxième et troisième position du triangle articulé (5) dans la position fermée, le contenant (1) présentant dans la deuxième position du triangle articulé (5) une hauteur supérieure (h₂) que celle dans la troisième position.

3. Contenant selon la revendication 1 ou 2, **caractérisé en ce que** l'au moins un triangle articulé (5) étant conçu sous la forme d'une charnière de battant.

4. Contenant selon la revendication 2 ou 3, **caractérisé en ce que** le système articulé (3) comprenant un élément de butée (11) au moyen duquel le couvercle (4) de contenant est verrouillé ou peut être verrouillé dans la première position ouverte et/ou troisième position fermée à l'aide de la partie inférieure (2) de contenant.

5. Contenant selon la revendication 4, **caractérisé en ce que** l'élément de butée (11) est conçue sous la forme en particulier d'un dispositif d'enclenchement rotatif et à blocage automatique qui peut être enclenché dans la première ou la troisième position.

6. Contenant selon l'une quelconque des revendications 2 à 5, **caractérisé en ce que**
- sur le système articulé (3) est disposé au moins une butée, au moyen de laquelle le système articulé (3) peut être stabilisé dans la seconde position fermée, et/ou
- sur le système articulé (3) est disposé un élément de ressort, au moyen duquel le système articulé (3) précontraint le couvercle (4) de contenant dans sa position ouverte.
- sur le système articulé (3) est disposé un élément de ressort qui empêche une ouverture automatique du couvercle (4) de contenant dans la première et la troisième position.

7. Hayon arrière d'un véhicule automobile,
- comprenant un élément de base,
- comprenant un élément pivotant disposé sur l'élément de base, au moyen duquel l'élément de base est relié pivotant à une zone de hayon du véhicule automobile afin d'ouvrir ou fermer sélectivement une ouverture arrière ménagée dans la zone arrière du véhicule automobile,
- comprenant un contenant (1) monté sur la partie supérieure de l'élément de base selon l'une quelconque des revendications précédentes.

8. Véhicule automobile
- comprenant une zone arrière présentant une ouverture arrière,
- l'ouverture arrière pouvant être fermée au moyen d'un hayon arrière selon la revendication 7.
